# EUROPEAN PATENT SPECIFICATION

(11) **EP 3 450 876 B1**
(45) Date of publication and mention of the grant of the patent: **07.07.2021**
(21) Application number: 18192379.8
(22) Date of filing: 04.09.2018
(51) Int. Cl.: F24S 25/61, F24S 25/13, F24S 25/65

(54) **SUPPORT STRUCTURE FOR INSTALLING SOLAR COLLECTOR PANELS, COMPRISING A QUICK FASTENING DEVICE**
STRUKTUR ZUR INSTALLATION VON SOLARPANEELEN, UMFASSEND EINE SCHNELLVERSCHLUSSVORRICHTUNG
STRUCTURE POUR INSTALLER DES PANNEAUX SOLAIRES, COMPRENANT UN DISPOSITIF DE FIXATION RAPIDE

(30) Priority: 05.09.2017 ES 201731024 U
(43) Date of publication of application: 06.03.2019
(73) Proprietor: Cardona Dominguez, Sergio, 46017 Valencia (ES)
(72) Inventor: Cardona Dominguez, Sergio, 46017 Valencia (ES)
(74) Representative: Sanz-Bermell Martinez, Alejandro

(56) References cited:
- EP-A1- 1 947 402
- EP-A2- 2 206 992
- WO-A1-2013/092428
- DE-A1-102007 023 177
- DE-U1-202007 003 060
- DE-U1-202008 000 997
- DE-U1-202014 102 470

## Description

The present invention belongs to the technical sector of assemblies and apparatuses that aim to assemble support structures, and in particular, assembling support structures for solar collector panels.

### State of the art

The document ES1057555U describe a device for forming solar collector supports comprising a series of support means on the ground or an inclined floor, a set of longitudinal support bars forming a square base arranged on the support means and a set of oblique vertical bars holding another set of support bars that determine the plane on which the solar panel rests.

In this document, the support means are formed by square bases, each one of which comprises a set of vertical studs on which a plate is inserted. On each plate there is a foot, which is a vertically arranged elongated part.

Said foot is inserted into a double-angled part that connects the ground supports to the structure and which is normally fastened by being screwed to it. The double-angled part is, in turn, normally joined by means of a threaded joint to junctions, or it can be replaced by flanges adjacent to the junction, forming a single part. The junctions are a set of parts that enable joining between the horizonal bars and the oblique bars. This joining is also carried out by means of screws that are inserted into holes made in the parts to be joined.

Furthermore, the joining between the secondary bars and the support bars forming the plane on which the solar collector panel is arranged are joined by means of fixtures, normally screwed to both profiles.

Document EP 1947 402 A1 describes a support frame for solar panels made up of some inclined spars fixed on feet, some transversal cross members assembled at different heights on the spars by means of some intermediary pieces that can be coupled by pressure, and some clamps that can be pressure fixed onto any point of the cross members to make the fixing of solar panel frames of different dimensions.

The present invention discloses a support structure according to claim 1. The support structure comprises a set of fastening elements for joining by means of fitting and clipping between the different bars and between the support means and the bars forming the base of the support structure of solar collector panels. Thus, the assembly of the structure is facilitated since it is carried out by fitting the aforementioned parts between the different elements, and it avoids using numerous screwed joints or parts, which facilitates the installation and reduces the time of the assembly process of the support structure of solar collector panels.

### Explanation of the invention

The support structure of solar collector panels rests on fastening elements for fastening to the floor on which the base bars of the structure are arranged. On these base bars, there are the secondary bars, normally two inclined secondary bars (although there can be more than two), each of which is joined to one end of the base bar. In a preferred embodiment to be applied to a solar collector plate, which is usually inclined to optimize the reception of light with the greatest perpendicularity, the first secondary bar constitutes the support of the solar panel; the second secondary bar according to the length thereof determines the inclination of the solar collector panel.

At least two substructures formed by the base bars and the inclined bars are arranged in parallel. At least two support bars are arranged between every two substructures, supported on the inclined bars. The solar collector panel rests on these support bars, although it could be used to support any other device capable of being held by a support structure.

In the support structure of solar collector panels, at least two types of profiles in the bars that commonly comprise it are distinguished. The first profile is a bar profile with four, generally square, facets comprising grooves in some of the faces thereof. The inner part of at least one of the grooves comprises ribs for fitting some of the joining elements. This first profile is used for the base bars of the structure and for the support bars that form the plane on which the solar collector panel rests. The second profile is an L-shaped profile. This second profile is used in the secondary bars of these installations.

The invention discloses a mounting structure comprising a quick fastening device comprising at least first fastening elements for joining the base bars and the secondary bars and second fastening elements for joining the first secondary bar and the support bars.

The fastening elements have an open shape and comprise two arms, the first arm is a central insertion arm that fits into inner ribs made in one of the grooves of the first profile, and the other arm is a lateral support stabilising arm of the profile. The fastening elements thus enable quick joining with the first profile by mechanical elasticity, and formal correspondence that works with the immobility thereof once inserted. The fastening elements further comprise a fastening means (for example, a hole and a screw or a 90-degree rotating lock) in the central part thereof for the joining thereof to another bar of the first profile. The lateral support stabilising arm can further comprise a longitudinal slot for inserting one of the flanges of the second L-shaped profile, thus providing another way of joining a bar of the first profile and a bar of the second L-shaped profile. The fastening elements can further comprise a fin, which is arranged on the face opposite the face that has the arms, said fin comprising a hole capable of being passed through for the fastening thereof by a bolt.

In another embodiment, the ends of the two arms of the fastening elements have a shape corresponding to outer ribs made in the grooves of the first type of profile, such that they are arranged in two opposite grooves of the first profile, fastening the fastening elements on opposite faces of the profile to the base bar of the structure. In this case, the fastening elements on opposite faces of the profile have a through hole capable of being passed through by a bolt. Furthermore, one of the arms of these fastening elements on opposite faces of the profile can also have a longitudinal slot for inserting one of the flanges of the second L-shaped profile. The bolt, the fastening screw or the joining by 90-degree rotation constitute secure joining means; meanwhile, each fastening element achieves provisional or definitive fastening, which provides enough stability to the set during the assembly thereof.

The fastening means of fastening to the floor is normally formed by a bolt (or other fixing element) fixed to the floor (it can be tiling, roofing, terrace, etc.) on which the entire structure is located, with damp-proofing means and height adjusting means of the bars that join to it. The bolt receives the third fastening element that is fastened by means of a nut (normally an anti-extraction nut) and that is adjusted by height. The base bar corresponding to the first profile is fastened to this third fastening element.

The joining of the bars forming the base of the structure and the secondary bars is carried out by fastening the first fastening elements to the secondary bars in the central part thereof to the outer face of one of the flanges of the second L-shaped profile, for example, by means of screws or other means. The first fastening elements are fastened to the base bars corresponding to the first profile by fitting the arms that correspond to the shape of the first profile.

Finally, the joining of the secondary bars and the support bars forming the plane on which the solar collector panel rests is carried out by fitting the arms of the second fastening elements corresponding to the shape of the first profile to the support bars, and inserting one of the flanges of the secondary bar corresponding to the second L-shaped profile into the slot of the fastening elements.

### Brief description of the drawings

With the objective of illustrating the explanation that follows, six sheets of drawings are attached to the present specification in which the essence of the present invention according to a particular embodiment is represented by way of example and not limitation in eleven figures, and wherein:
- Figure 1: shows a profile view of the support structure of solar collector panels;
- Figure 2: shows the different elements of the joining of one of the base bars to the fastening means;
- Figure 3: shows the joining of one of the base bars to the fastening means;
- Figure 4: shows the different elements of the joining of one of the base bars to one of the secondary bars;
- Figure 5: shows the joining of one of the base bars to one of the secondary bars;
- Figure 6: shows the first step of the joining of the quick fastening device and the second profile in an alternative embodiment;
- Figure 7: shows the second step of the joining of the quick fastening device and the second profile in an alternative embodiment;
- Figure 8: shows the different elements of the joining of one of the secondary bars to one of the support bars;
- Figure 9: shows the joining of one of the secondary bars to one of the support bars;
- Figure 10: shows the different elements of the joining of one of the base bars to the fastening means by means of an exemplary fastening element on opposite faces of the profile;
- Figure 11: shows the joining of one of the base bars to the fastening means by means of the exemplary fastening element on opposite faces of the profile.

### Description of the invention

The support structure of solar collector panels is formed by at least two base bars (30) arranged in parallel on at least two fastening means (20), one on each end of each base bar (30). At least two secondary bars (40, 41) are arranged on each base bar (30). The first secondary bar (40) determines the inclination of the solar collector panel (60), while the second secondary bar (41) helps hold the first secondary bar (40). The two secondary bars (40, 41) are joined on the unjoined ends thereof to the base bar (30). This structure can be repeated to adapt to the required plane length. At least two support bars (50) are arranged between every two secondary bars (40). The support bars (50) form a plane parallel to the first secondary bars (40) on which the solar collector panel (60) rests.

On the structure, two types of profiles that comprise it are distinguished. The first profile (1) is a bar profile with four, generally square, facets. This first profile (1) has three grooves in three of the faces thereof. These grooves have an approximate inner shape of a half hexagon and comprise a narrower part that reduces the hollow in the face of the profile. The inner face of one of the grooves (100) comprises two inner ribs (101) for fitting by elasticity of a quick fastening device (10). This first profile (1) is used for the base bars (30) of the structure and for the support bars (50) forming the inclined plane on which the solar collector panel rests.

The second profile (2) is an L-shaped profile. This second profile is used in the secondary bars (40, 41).

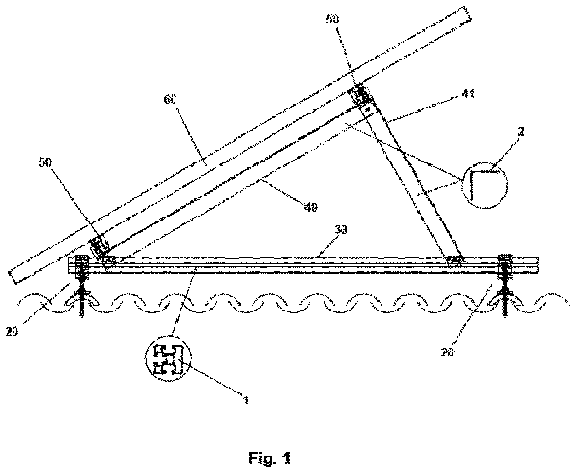

A side view of the structure can be seen in Figure 1.

The fastening means (20) is formed by a plate (22) passed through by a bolt (23). The plate (22) has a shape where it is adapted to the surface on which there is (roofing, terrace, tiling, etc.); in the figures it rests on a curved tile (21), being able to be flat on a terrace floor. Furthermore, the plate (22) is fastened by means of a nut (24) threaded on the bolt (23) on the tile (21). For joining the fastening means (20) to the base bar (30) there is a quick fastening device comprising a fastening element (10). The fastening element (10) has an open shape and comprises two arms (11, 14) that emerge from a central part. The first arm (11) is a central insertion arm in the square profile and it comprises two tabs (12) ending in a spear (13) that fit into the resulting lower hollow of the ribs (101) made in the corresponding groove (100) of the first profile (1). The second arm (14) is a lateral support stabiliser arm of the profile. The fastening element (10) further comprises a fin (16), which is arranged on the face opposite the face that has the arms (11, 14), said fin (16) comprising a hole (17) capable of being passed through by the bolt (23) of the fastening means (20) for fastening the structure to the floor. The fin (16) of the fastening element (10) is arranged in the upper part of the bolt (23). The height of the fastening element (10) is adjusted by means of an adjusting nut (25) threaded on the bolt (23). The fastening element (10) is fastened in the bolt (23) by means of a fastening nut (26) threaded on the bolt. The fit of the base bar (30) of the structure into the first fastening element (10) prevents vertical movement and transverse movement to the fastening element (10) of the base bar (30). Longitudinal movement with respect to the fastening element (10) is prevented by fastening means such as screws (19), for example, self-tapping screws that the first arm (11) of the fastening element (10) and the profile (1) are joined to, in this case the base bar (30).

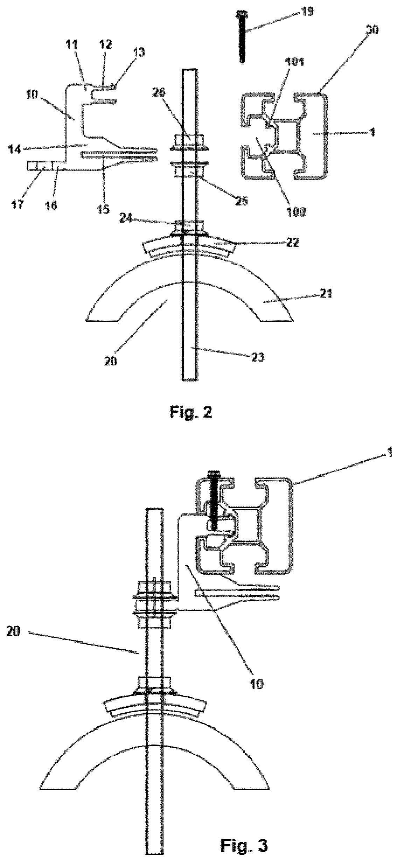

In Figures 2 and 3, the third fastening elements (10) and how they fit into the fastening means (20) and into the base bars (30) of the structure can be seen in greater detail.

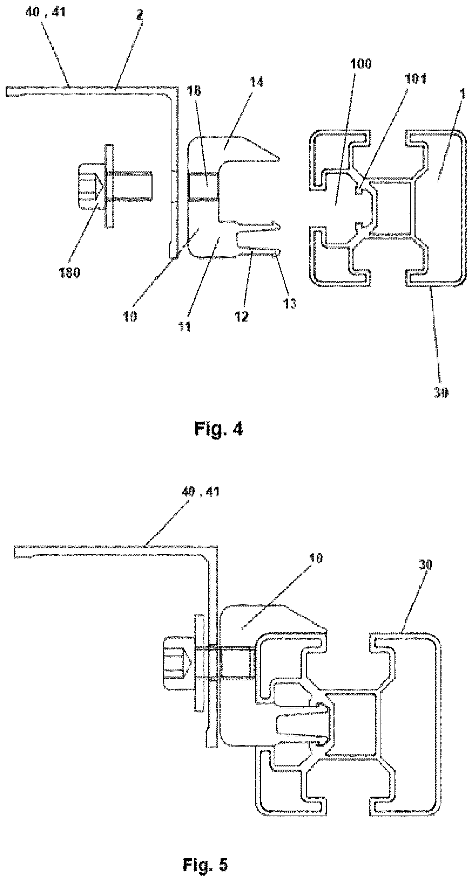

The figures show that the slot (15) of the second arm (14) of the third fastening elements (10) does not perform any function on the joining of the fastening means (20) to the base bar (30), which corresponds to the first profile (1). According to the same essential nature, two fastening elements (10) can be manufactured, one in which the second arm (14) has a slot (15) for fitting the second L-shaped profile, and the other in which the second arm does not have the slot (15) for fitting the second L-shaped profile. A first fastening element in which the second arm (14) does not have the slot (15) for fitting the second L-shaped profile can be seen in Figures 4 and 5, which represent the joining of the base bar (30) to one of the secondary bars (40, 41). It is important to note that in this case the first fastening element (10) also does not have the fin (16), since this fin is only necessary for inserting the bolt (23) of the fastening means (20), and not for joining bars. In this case, the fin (16) can be cut or the device can be manufactured without the fin (16).

The joining of the base bars (30) and the secondary bars (40, 41) is carried out by fastening the first fastening elements to the secondary bars (40, 41) in the central part thereof on the outer face of one of the flanges of the second L-shaped profile (2). In one embodiment, the joining of the secondary bar (40, 41) and the first fastening elements (10) is carried out by means of a screw (180) that passes through a hole (18) made in the central part of the first fastening elements (10). The first fastening elements (10) are fastened to the base bar (30) by means of fitting that has been explained previously, and they can also have a screw to prevent lateral movement.

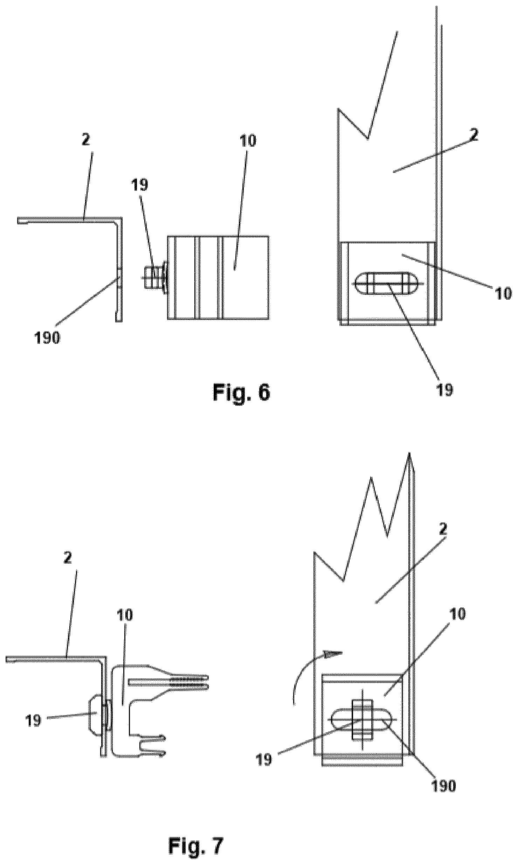

In one equivalent embodiment, in the joining of the secondary bars (40, 41) to the base bar (50), the first fastening elements (10) are fastened to the secondary bars by means of a 90-degree closure. Thus, in the central part of the first fastening elements (10) on the face opposite the face that has the arms (11, 14), there is a fin head (19) that is inserted into a groove (190) arranged in one of the flanges of the secondary bars corresponding to the second L-shaped profile, and once inserted, it is rotated 90 degrees, such that the movement of the fastening element (10) is prevented. Figure 6 shows the first step of inserting the fin head (19) into the groove (190), and Figure 7 shows the second step of rotating the fin head (19) once it has been inserted into the groove (190).

The joining of the support bars (50) to the secondary bar (40) is carried out by fitting the tabs (12) with a spear point (13) of the first arm (11) of the second fastening elements (10) into the inner ribs (101) of one of the grooves (100) of the first profile that forms the support bars (50). The second arm (14), in addition to being used as a lateral support for the support bar (50), fastens the secondary bar (40) by means of insertion into the slot (15) of one of the flanges of the second L-shaped profile (2) that forms the secondary bar (40).

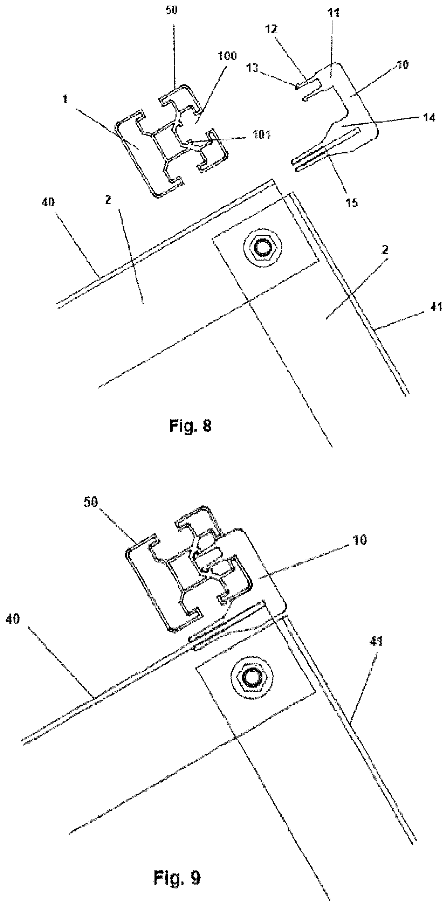

Figures 8 and 9 show the joining of the secondary bar (40) and the support bar (50) with the second fastening element in detail.

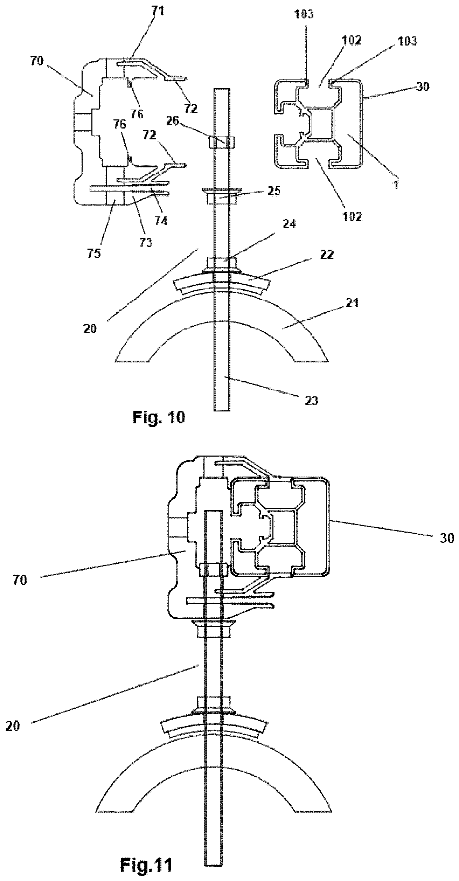

Figures 10 and 11 show an example of use of a fastening element, that does not form part of the invention, on opposite faces of the profile (70), in which the joining of the fastening means (20) to the base bar (30) is shown. The fastening element is provided on opposite faces of the profile (70). The fastening element on opposite faces of the profile (70) is a part that has an open shape corresponding to the first profile (1), which comprises a central part from which two arms (71, 73) emerge, and which has a through hole between the arms (71, 73) thereof, through which the bolt (23) of the fastening means (20) is inserted. The ends of the arms (71, 73) of the fastening element on opposite faces of the profile (70) are fins (72) that have a shape corresponding to the outer ribs (103) of the grooves of the first profile (1). These fins (72) are inserted into the opposite grooves (102) of the first profile (1) and they fit into the outer ribs (103). The fastening element (70) further comprises two inner tabs (76) that are used as a seat and limit to entry and adjustment between the base bar (30) and fastening element on opposite faces of the profile (70). The second arm (73), unlike the first arm (71), comprises a longitudinal slot (74) for inserting one of the flanges of the second L-shaped profile (2).

## Claims

1. A support structure for installing solar collector panels on roofing, terraces or tiling, wherein the support structure is formed by at least two base bars (30) arranged in parallel, wherein each of these base bars (30) can be arranged on at least two fastening means (20) joined to the surface in which the structure is mounted; at least two secondary bars comprising first (40) and second (41) secondary bars arranged on each of the base bars (30), wherein the first secondary bar (40) is determining the inclination of the solar collection panel (60), and the second secondary bar (41) is helping to hold the first secondary bar (40), the two secondary bars (40, 41) being joined on the unjointed ends thereof to the base bar (30); and at least two support bars (50) arranged between every two first secondary bars (40), the support bars (50) forming a plane parallel to the first secondary bars (40) on which the solar collector panel (60) can rest;
**characterized in that**
the base bars (30) and the support bars (50) are a first profile (1) provided with at least one longitudinal groove (100) comprising two inner ribs (101) in one of its faces; and the secondary bars (40, 41) are a second profile (2), said second profile being an L-shaped profile;
wherein the support structure comprises a quick fastening device comprising at least first fastening elements (10) for joining the base bars (30) and the secondary bars (40,41) and second fastening elements (10) for joining the first secondary bars (40) and the support bars (50); wherein the first and second fastening elements (10) are each formed by an open shape body that comprises two arms (11, 14) in one of its faces that emerge from a central part; the first arm (11) being a central insertion arm that comprises two tabs (12) ending in a spear (13) that fit into the resulting lower hollow of inner ribs (101) made in the corresponding groove (100) of the first profile (1); the second arm (14) being a lateral support stabilizing arm of the first profile; wherein the central part of the first fastening elements (10) comprises either a hole (18) in the central part thereof capable of being passed through by an element such as a screw or bolt for joining the quick fastening device and one of the flanges of the second L-shaped profile (2), or it has a fin head (19) in the central part thereof that is capable of being inserted into a slot (190) made in one of the flanges of the second L-shaped profile (2), and capable of rotating 90 degrees once inserted into the slot (190) for the joining of the quick fastening device and one of the flanges of the second L-shaped profile (2);
wherein the second arm (14) of the second fastening elements (10) comprises a longitudinal slot (15) for inserting one of the flanges of the second L-shaped profile (2);

2. The support structure according to claim 1, **characterised in that** it further comprises third fastening elements (10) for joining the base bars (30) and fastening means (20) joined to the surface in which the structure is mounted,
wherein the third fastening elements (10) are each formed by an open shape body that comprises two arms (11, 14) in one of its faces that emerge from a central part; the first arm (11) being a central insertion arm that comprises two tabs (12) ending in a spear (13) that fit into the resulting lower hollow of inner ribs (101) made in the corresponding groove (100) of the first profile (1); the second arm (14) being a lateral support stabilizing arm of the first profile; wherein a fin (16) is arranged on the face of the third fastening elements (10) opposite to the face of the third fastening elements (10) that has the arms (11,14), the fin (16) comprising a hole (17) capable of being passed through by a fastening bolt (23) for fastening the structure to the surface on which the structure is mounted.

## Patentansprüche

1. Tragstruktur für die Installation von Solarkollektoren auf Dächern, Terrassen oder Kachelungen, wobei die Tragstruktur durch mindestens zwei parallel angeordnete Basisstangen (30) gebildet ist, wobei jede dieser Basisstangen (30) auf mindestens zwei Befestigungsmitteln (20) angeordnet sein kann, die mit der Oberfläche zusammengefügt sind, in der die Struktur montiert ist; mindestens zwei Sekundärstangen, die erste (40) und zweite (41) Sekundärstangen umfassen, die an jeder der Basisstangen (30) angeordnet sind, wobei die erste Sekundärstange (40) die Neigung des Solarkollektors (60) bestimmt und die zweite Sekundärstange (41) dazu beiträgt, die erste Sekundärstange (40) zu halten, wobei die zwei Sekundärstangen (40, 41) an ihren nicht zusammengefügten Enden mit der Basisstange (30) zusammengefügt sind; und mindestens zwei Tragstangen (50), die zwischen jeweils zwei ersten Sekundärstangen (40) angeordnet sind, wobei die Tragstangen (50) eine Ebene parallel zu den ersten Sekundärstangen (40), auf denen die Sonnenkollektorplatte (60) aufliegen kann, bilden;
**dadurch gekennzeichnet, dass**
die Basisstangen (30) und die Tragstangen (50) ein erstes Profil (1) sind, das mit mindestens einer Längsnut (100) versehen ist, die zwei Innenrippen (101) in einer ihrer Flächen umfasst; und
die Sekundärstangen (40, 41) ein zweites Profil (2) sind, wobei das zweite Profil ein L-förmiges Profil ist;
wobei die Tragstruktur eine Schnellbefestigungsvorrichtung umfasst, die mindestens erste Befestigungselemente (10) zum Zusammenfügen der Basisstangen (30) und der Sekundärstangen (40, 41) und zweite Befestigungselemente (10) zum Zusammenfügen der ersten Sekundärstangen (40) und der Tragstangen (50) umfasst;
wobei das erste und das zweite Befestigungselement (10) jeweils durch einen offenen Formkörper gebildet werden, der zwei Arme (11, 14) in einer seiner Flächen umfasst, die aus einem Mittelteil entspringen; wobei der erste Arm (11) ein mittlerer Einführarm ist, der zwei Laschen (12) umfasst, die in einem Speer (13) enden, der in die resultierende untere Vertiefung der inneren Rippen (101) passt, die in der entsprechenden Nut (100) des ersten Profils (1) hergestellt sind; wobei der zweite Arm (14) ein lateraler Tragstabilisierungsarm des ersten Profils ist;
wobei der Mittelteil der ersten Befestigungselemente (10) entweder ein Loch (18) in seinem Mittelteil aufweist, durch das ein Element wie eine Schraube oder ein Bolzen zum Zusammenfügen der Schnellbefestigungsvorrichtung und einer der Flansche des zweiten L-förmigen Profil (2) durchgeführt werden können, oder einen Lamellenkopf (19) in seinem Mittelteil aufweist, der in einen Schlitz (190) eingeführt werden kann, der in einem der Flansche des zweiten L-förmigen Profils (2) hergestellt ist und sich um 90 Grad drehen kann, sobald dieser in den Schlitz (190) eingeführt wurde, um die Schnellbefestigungsvorrichtung und einen der Flansche des zweiten L-förmigen Profils (2) zusammenzufügen;
wobei der zweite Arm (14) der zweiten Befestigungselemente (10) einen Längsschlitz (15) zum Einführen eines der Flansche des zweiten L-förmigen Profils (2) umfasst.

2. Tragstruktur nach Anspruch 1, **dadurch gekennzeichnet, dass** diese ferner dritte Befestigungselemente (10) zum Zusammenfügen der Basisstangen (30) und Befestigungsmittel (20) umfasst, die mit der Oberfläche zusammengefügt sind, in der die Struktur montiert ist, wobei die dritten Befestigungselemente (10) jeweils durch einen offenen Formkörper gebildet sind, der zwei Arme (11, 14) in einer seiner Flächen umfasst, die aus einem zentralen Teil entspringen; wobei der erste Arm (11) ein mittlerer Einführarm ist, der zwei Laschen (12) umfasst, die in einem Speer (13) enden, der in die resultierende untere Vertiefung der inneren Rippen (101) passt, die in der entsprechenden Nut (100) des ersten Profils (1) hergestellt sind; wobei der zweite Arm (14) ein lateraler Tragstabilisierungsarm des ersten Profils ist;
wobei eine Rippe (16) auf der Fläche der dritten Befestigungselemente (10) gegenüber der Fläche der dritten Befestigungselemente (10) angeordnet ist, welche die Arme (11, 14) aufweist, die Rippe (16), umfassend ein Loch (17), durch das ein Befestigungsbolzen (23) durchgeführt werden kann, um die Struktur an der Oberfläche zu befestigen, auf der die Struktur montiert ist.

## Revendications

1. Structure de support pour l'installation de panneaux de capteurs solaires sur la toiture, les terrasses ou le carrelage, dans laquelle la structure de support est formée d'au moins deux barres de base (30) disposées en parallèle, dans laquelle chacune de ces barres de base (30) peut être disposée sur au moins deux moyens de fixation (20) joints à la surface où la structure est montée ; au moins deux barres secondaires comprenant des première (40) et deuxième (41) barres secondaires disposées sur chacune des barres de base (30), dans laquelle la première barre secondaire (40) détermine l'inclinaison du panneau de collecte solaire (60), et la deuxième barre secondaire (41) aide à maintenir la première barre secondaire (40), les deux barres secondaires (40, 41) étant jointes sur les extrémités non jointes de celles-ci à la barre de base (30) ; et au moins deux barres de support (50) disposées toutes les deux premières barres secondaires (40), les barres de support (50) formant un plan parallèle aux premières barres secondaires (40) où le panneau de capteur solaire (60) peut reposer ; **caractérisée en ce que**
les barres de base (30) et les barres de support (50) sont un premier profil (1) pourvu d'au moins une rainure longitudinale (100) comprenant deux nervures internes (101) dans l'une de ses faces ; et
les barres secondaires (40, 41) sont un deuxième profil (2), ledit deuxième profil étant un profil en forme de L ;
dans laquelle la structure de support comprend un dispositif de fixation rapide comprenant au moins des premiers éléments de fixation (10) pour la jonction des barres de base (30) et des barres secondaires (40, 41) et des deuxièmes éléments de fixation (10) pour la jonction des premières barres secondaires (40) et des barres de support (50) ;
dans laquelle les premiers et deuxièmes éléments de fixation (10) sont chacun formés d'un corps de forme ouverte qui comprend deux bras (11, 14) dans l'une de ses faces qui émergent d'une partie centrale; le premier bras (11) étant un bras d'insertion central qui comprend deux pattes (12) se terminant par une broche (13) qui s'insèrent dans le creux inférieur résultant des nervures internes (101) réalisées dans la rainure correspondante (100) du premier profil (1) ; le deuxième bras (14) étant un bras de stabilisation de support latéral du premier profil ;
dans laquelle la partie centrale des premiers éléments de fixation (10) comprend soit un trou (18) dans la partie centrale de ceux-ci pouvant être traversé par un élément tel qu'une vis ou un boulon pour la jonction du dispositif de fixation rapide et de l'une des brides du deuxième profil en L (2), soit elle a une tête d'ailette (19) dans la partie centrale de ceux-ci qui peut être insérée dans une rainure (190) réalisée dans l'une des brides du deuxième profil en L (2), et pouvant tourner à 90 degrés une fois insérée dans la rainure (190) pour la jonction du dispositif de fixation rapide et de l'une des brides du deuxième profil en forme de L (2) ;
dans laquelle le deuxième bras (14) des deuxièmes éléments de fixation (10) comprend une rainure longitudinale (15) pour l'insertion de l'une des brides du deuxième profil en forme de L (2).

2. Structure de support selon la revendication 1, **caractérisée en ce qu'**elle comprend en outre des troisièmes éléments de fixation (10) pour la jonction des barres de base (30) et des moyens de fixation (20) joints à la surface où la structure est montée, dans laquelle les troisièmes éléments de fixation (10) sont chacun formés d'un corps de forme ouverte qui comprend deux bras (11, 14) dans l'une de ses faces qui émergent d'une partie centrale ; le premier bras (11) étant un bras d'insertion central qui comprend deux pattes (12) se terminant par une broche (13) qui s'insèrent dans le creux inférieur résultant des nervures internes (101) réalisées dans la rainure correspondante (100) du premier profil (1) ; le deuxième bras (14) étant un bras de stabilisation de support latéral du premier profil ;
dans laquelle une ailette (16) est disposée sur la face des troisièmes éléments de fixation (10) opposée à la face des troisièmes éléments de fixation (10) qui a les bras (11, 14), l'ailette (16) comprenant un trou (17) pouvant être traversé par un boulon de fixation (23) pour la fixation de la structure à la surface où la structure est montée.
